# EUROPÄISCHE PATENTSCHRIFT

(11) **EP 0 460 249 B1**
(45) Veröffentlichungstag und Bekanntmachung des Hinweises auf die Patenterteilung: **27.07.1994**
(21) Anmeldenummer: 90110557.7
(22) Anmeldetag: 05.06.1990
(51) Int. Cl.: G01L 1/22

(54) **Dehnungsmessstreifen**
Strain gauge
Jauge de contrainte

(43) Veröffentlichungstag der Anmeldung: 11.12.1991
(73) Patentinhaber: HOTTINGER BALDWIN MESSTECHNIK GMBH, D-64201 Darmstadt (DE)
(72) Erfinder: Ruppin, Hagen, D-6085 Nauheim (DE)
(74) Vertreter: Brandt, Ernst-Ulrich, Dipl.-Phys., Dipl.-Ing.

(56) Entgegenhaltungen:
- DE-A- 1 798 053
- GB-A- 728 606

## Beschreibung

Die Erfindung bezieht sich auf einen Dehnungsmeßstreifen, insbesondere einen Dehnungsmeßstreifen für Meßgrößenaufnehmer, mit einem auf zumindest einer Seite einer Trägerschicht angeordneten, aus zumindest einer mit der Trägerschicht verbundenen Schicht elektrisch leitenden Materials herausgeformten Meßgitter.

Ein Dehnungsmeßstreifen der eingangs genannten Art ist aus der GB-A-728 606 bekannt. Aus einer sehr dünnen, gewalzten Metallfolie wird fotolithographisch ein Meßgitter in Form eines Widerstandsmäanders mit Anschlußbereichen an den Enden ausgeätzt; die Metallfolie ist dabei mit einer zweiten Metallfolie verbunden. Nach dem Ätzvorgang wird eine isolierende Epoxidharz-Trägerschicht auf die erste Metallfolie aufgebracht und die zweite Metallfolie entweder vollständig oder fast vollständig bis auf Verstärkungen im Bereich der elektrischen Anschlüsse entfernt. Dehnungsmeßstreifen mit einer Epoxidharz-Trägerschicht sind bezüglich Herstellung, Handhabung und Applikation mit Problemen behaftet, da die Trägerschicht spröde ist und damit Bruchgefahr besteht. Eine Verwendung bei Meßgrößenaufnehmern bedarf vorsichtiger Handhabung, während die Verwendung bei Spannungsanalysen nicht gebräuchlich ist. Diese Probleme liegen auch bei Dehnungsmeßstreifen vor, die eine Phenolharz-Trägerschicht aufweisen.

Ferner sind Dehnungsmeßstreifen bekannt, die durch ein Glasfaservlies verstärkte Epoxidharz- bzw. Phenolharz- Trägerschichten aufweisen; jedoch ist auch hier die Bruchgefahr erheblich. Bei der Herstellung von Dehnungsmeßstreifen führt die Bruchneigung zu einem erheblichen Ausschuß.

Der Erfindung liegt daher die Aufgabe zugrunde, einen Dehnungsmeßstreifen zu schaffen, der kostengünstig herstellbar und einfach zu handhaben bzw. zu applizieren ist.

Erfindungsgemäß wird diese Aufgabe dadurch gelöst, daß Bereiche der Trägerschicht außerhalb des Meßgitters mit zumindest einer Materialschicht, insbesondere einer Schicht elektrisch leitenden Materials bedeckt sind. Die Trägerschicht ist bei der erfindungsgemäßen Ausführung außerhalb des Meßgitters und seiner Anschlüsse nicht mehr frei von einer Beschichtung, sondern mit zumindest einer Materialschicht bedeckt, die vorzugsweise mit geringem Abstand zum Meßgitter angeordnet ist. Dadurch, daß die Bereiche der Trägerschicht außerhalb des Meßgitters im wesentlichen vollständig mit zumindest einer Materialschicht bedeckt sind, ist die Bruchgefahr bei der Herstellung und Handhabung der Dehnungsmeßstreifen gravierend verringert, weil der Verbund aus Trägerschicht und Materialschicht eine bedeutend bessere Stabilität aufweist, was insbesondere beim Vereinzeln der Dehnungsmeßstreifen aus einem Nutzen (Herstellungseinheit mit mehreren DMS- Anordnungen), beispielsweise durch Schneiden, ein Brechen oder Splittern des ganzen Dehnungsmeßstreifens oder der Kanten verhindert. Auch beim Entfernen des Fotolacks erweist sich die größere mechanische Stabilität als vorteilhaft. Sogar eine automatische Gesamtherstellung ist jetzt möglich, da die mechanischen Eigenschaften eine problemlose Handhabung auch in einem automatisierten Herstellungsprozeß gewährleisten.

Stellt man beispielsweise das Meßgitter in bekannter Weise durch selektives Ätzen des Meßgitters aus einer Schicht leitenden Materials her, so ist es in vorteilhafter Weise nur noch erforderlich, eine schmale Trennfuge um das Meßgitter und seine Anschlüsse herum wegzuätzen, wobei die restliche Schicht elektrisch leitenden Materials nicht entfernt zu werden braucht.
Die Ätzlösung wird dadurch nur noch in sehr geringem Umfang mit Fremdionen belastet, so daß sie in vorteilhafter Weise erheblich länger verwendet werden kann und eine bessere Reproduzierbarkeit der Ätzparameter aufweist.

Überraschenderweise hat sich herausgestellt, daß das Kriechen des Dehnungsmeßstreifens geringer wird. Dies war für den Fachmann nicht vorhersehbar, da ihm zwar geläufig ist, daß gezielte Veränderungen an der Einheit Trägerschicht/ Meßgittergeometrie erforderlich sind, um das Kriechen zu beeinflussen, beispielsweise Veränderungen an den Umkehrstellen des mäanderförmigen Meßgitters (Der Weg zum Meßgrößenaufnehmer, Hottinger Baldwin Meßtechnik GmbH, Darmstadt 1989, Kapitel 3.2.6). Daß jedoch mit einer "ungezielten" Maßnahme, nämlich dem Stehenlassen einer Materialschicht oder Bedeckung außerhalb des Meßgitters eine Verringerung des Kriechens erreicht ist, ist ein überraschender Effekt, dessen Ursachen im einzelnen noch nicht schlüssig zu erklären sind. Es mag dabei auch eine Rolle spielen, daß Spannungsspitzen der Belastung besser absorbiert werden.

Vorteilhaft ist weiterhin, daß die Feuchteaufnahme der Trägerschicht und die daraus resultierende unerwünschte Dehnung geringer ist, so daß die Änderung des Meßsignals bei Feuchtänderungen der umgebenden Atmosphäre geringer ist. Hieraus resultiert auch eine Verbesserung der Langzeitstabilität der Meßeigenschaften.

Zur Beeinflussung der Meßeigenschaften, z. B. des Kriechens, kann ferner vorgesehen werden, daß bestimmte Bereiche der Trägerschicht außerhalb des Meßgitters mit zumindest einer Materialschicht, insbesondere einer Schicht elektrisch leitenden Materials bedeckt sind. Beispielsweise kann die Bedeckung derart ausgebildet sein, daß Bereiche der Bedeckung mit einer bestimmten Geometrie ausgebildet werden, beispielsweise mäanderförmige Bahnen der Bedeckungsschicht aus elektrisch leitendem Material, die bezüglich der Längserstreckungen quer zum mäanderförmigen Meßgitter angeordnet sind, so daß eine Kompensation bestimmter Eigenschaften des durch das Meßgitter definierten Dehnungsmeßstreifens erfolgt.

Die Erfindung sieht ferner vor, daß Material und / oder Dicke der Materialschicht auf Bereichen außerhalb des Meßgitters und des Meßgitters einander entsprechen. In vorteilhafter Weise kann so z. B. durch selektives Ätzen die Bedeckung durch dieselbe Schicht leitenden Materials, aus der auch das Meßgitter geformt ist, ausgebildet werden. Es kann jedoch auch vorgesehen werden, daß z. B. die Dicke der Materialschicht auf Bereichen außerhalb des Meßgitters größer ist als die Dicke des Meßgitters; dies wäre durch eine elektrolytische Beschichtung auf der nach dem Ätzen stehengebliebene Bedeckung der Trägerschicht außerhalb des Meßgitters zu realisieren. Die Bedeckung kann jedoch auch mit einem unterschiedlichen Material und/oder unterschiedlicher Dicke z. B. durch Vakuumbeschichtungsvorgänge oder mit Hilfe der Drucktechnik hergestellt werden. Auch die Anordnung mehrerer Schichten als Bedeckung liegt im Rahmen der Erfindung. Auch mit derartigen Maßnahmen, d. h. gezielter Material- und/ oder Dickenwahl der Bedeckung, ist es möglich, die Meßeigenschaften eines Dehnungsmeßstreifens zu verbessern. Ist die Dicke der Materialschicht größer als die Dicke des Meßgitters, kann in äußerst einfacher Weise das Meßgitter mit einer isolierenden Schicht abgedeckt werden, beispielsweise durch Ausgießen des Raumes über dem tieferliegenden Meßgitter, durch Rakeln eines pastenförmigen Materials oder durch Aufkleben einer das Meßgitter abdeckenden Folie auf die höher liegenden Materialschichtbereiche.

In der Materialschicht auf Bereichen außerhalb des Meßgitters lassen sich vorteilhaft Hinweise, z. B. auf den Hersteller oder Beschaltungshinweise oder Positionierungsmarken durch beispielsweise Wegätzen der Bedeckung an dieser Stelle ausformen.

Die Erfindung wird im folgenden anhand der Zeichnung näher erläutert.
Fig. 1 zeigt einen Dehnungsmeßsteifen nach der Erfindung in Draufsicht,
Fig. 2 zeigt einen Schnitt entlang der Linie II-II
Bei dem dargestellten Dehnungsmeßstreifen ist mit der Trägerschicht 1, beispielsweise einer glasfaserverstärkten Epoxidharz- Trägerschicht, eine Schicht elektrisch leitenden Materials verbunden. Aus dieser elektrisch leitenden Schicht ist ein Meßgitter 2 ausgeformt. Das Meßgitter 2 weist einen mäanderförmig angeordneten Streifen z. B. einer dünnen metallischen Schicht aus Konstantan auf, dessen Enden über Anschlußbereiche mit einer Auswerteschaltung in Form z. B. einer Wheatstone'schen-Brückenschaltung verbindbar sind.

Das Meßgitter 2 wird aus der Metallschicht beispielsweise durch Ätzen geformt, wobei die Metallschicht mit der Trägerschicht 1 durch eine Klebschicht fest verbunden ist. Außerhalb des Bereichs des Meßgitters 2 mit den Anschlüssen 3 und 4 ist eine Materialschicht 5 bzw. Bedeckung auf der Trägerschicht 1 vorgesehen, die in dem erläuterten Ausführungsbeispiel die Schicht elektrisch leitenden Materials ist, aus der auch das Meßgitter 2 samt Anschlüssen 3,4 geformt ist. Hierzu ist benachbart zum Meßgitter 2 mit den Anschlüssen 3 und 4 eine beispielsweise durch Ätzen erzeugte Trennfuge 6 vorgesehen, die jedoch auch mit anderen geeigneten Verfahren, beispielsweise mittels Laserabtragung erzeugt werden kann. In der Materialschicht 5 bzw. Bedeckung sind ferner Marken 7 zur Positionierung des Dehnungsmeßstreifens z. B. während seiner Herstellung und zur Applikation (als Ausrichtmarkierung) sowie ein Hinweis 8, hier auf den Hersteller, durch z. B. selektives Ätzen oder Laserabtragung erzeugt.

Die Materialschicht 5 kann auf einer Trägerschicht 1, die nur mit dem Meßgitter 2 samt Anschlüssen 3 und 4 versehen ist, zusätzlich durch jedes geeignete Verfahren aufgebracht werden, beispielsweise durch Vakuumabscheidung (Bedampfung, Sputtern). Es liegt im Rahmen der Erfindung, hierbei ein anderes Material als für das Meßgitter 2 zu verwenden und / oder eine andere Schichtdicke zu wählen. Weiterhin liegt es im Rahmen der Erfindung, die Materialschicht 5 so auszugestalten, daß die Meßeigenschaften durch die Formgebung der Materialschicht 5 positiv beeinflußt werden.

Das Meßgitter kann in jeder geeigneten Weise gegen Umgebungseinflüsse abgedeckt sein, beispielsweise durch eine Folie, durch im Vakuum aufgebrachte Schichten, durch Abdecken mit einer flüssig oder pastenförmig aufgebrachten Masse etc.

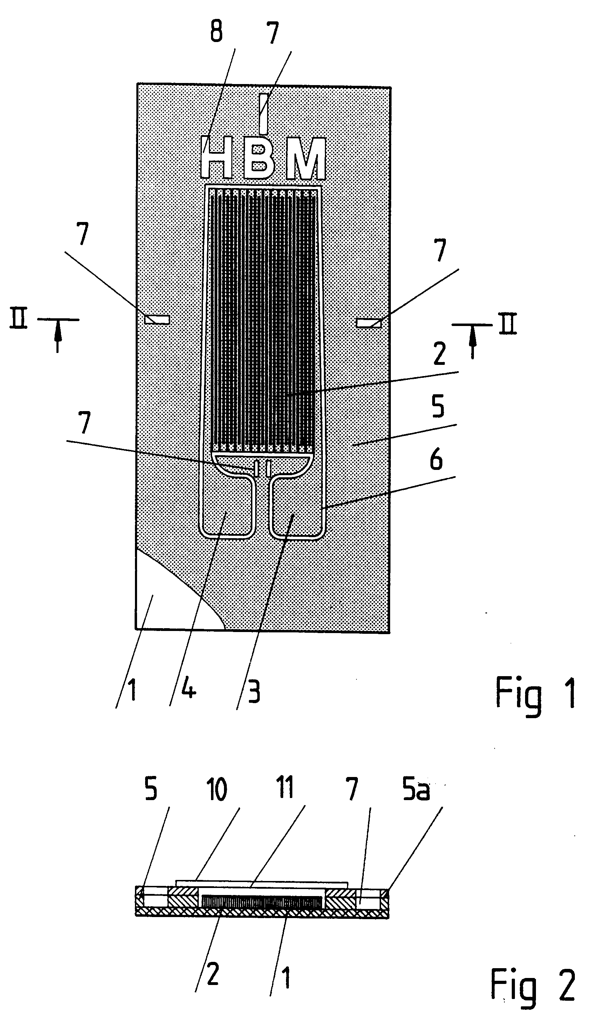

In Fig. 2 ist ein Dehnungsmeßstreifen dargestellt, bei dem die Materialschicht 5 bzw. Bedeckung im Unterschied zur Darstellung in Fig. 1 eine auf die Schicht elektrisch leitenden Materials, aus der auch das Meßgitter 2 samt Anschlüssen geformt ist, galvanisch aufgebrachte Schicht 5a aufweist; das Meßgitter 2 weist diese Schicht 5a nicht auf. Zur Abdeckung des Meßgitters 2 ist eine das Meßgitter 2 übergreifende Folie 10 aus elektrisch isolierendem oder leitendem Material (z. B. Metallfolie) auf den höher liegenden Bereichen der Schicht 5a beispielsweise durch Kleben befestigt. Der Raum unter der Folie 10 ist mit einer isolierenden Masse 11, beispielsweise Epoxidharz, ausgefüllt. Es kann jedoch auch wahlweise nur die Folie 10 oder nur die isolierende Masse 11 Verwendung finden.

## Patentansprüche

1. Dehnungsmeßstreifen, insbesondere Dehnungsmeßstreifen für Meßgrößenaufnehmer, mit einem auf zumindest einer Seite einer Trägerschicht (1) angeordneten, aus zumindest einer mit der Trägerschicht (1) verbundenen Schicht elektrisch leitenden Materials herausgeformten Meßgitter (2), dadurch gekennzeichnet, daß Bereiche dieser Seite der Trägerschicht außerhalb des Meßgitters (2) und seiner Anschlüsse mit zumindest einer Materialschicht (5), insbesondere einer Schicht elektrisch leitenden Materials bedeckt sind.

2. Dehnungsmeßstreifen nach Anspruch 1,
dadurch gekennzeichent, daß die Bereiche der Trägerschicht (1) außerhalb des Meßgitters (2) im wesentlichen vollständig mit zumindest einer Materialschicht (5), insbesondere einer Schicht elektrisch leitenden Materials bedeckt sind.

3. Dehnungsmeßstreifen nach Anspruch 1,
dadurch gekennzeichnet, daß zur Beeinflussung der Meßeigenschaften bestimmte Bereiche der Trägerschicht (1) außerhalb des Meßgitters (2) mit zumindest einer Materialschicht (5), insbesondere einer Schicht elektrisch leitenden Materials bedeckt sind.

4. Dehnungsmeßstreifen nach einem oder mehreren der vorhergehenden Ansprüche, dadurch gekennzeichnet, daß Material und/oder Dicke der Materialschicht (5) auf Bereichen außerhalb des Meßgitters (2) und des Meßgitters (2) gleich sind.

5. Dehnungsmeßstreifen nach einem oder mehreren der vorhergehenden Ansprüche, dadurch gekennzeichnet, daß die Dicke der Materialschicht (5) auf Bereichen außerhalb des Meßgitters (2) größer ist als die Dicke des Meßgitters (2).

6. Dehnungsmeßstreifen nach einem oder mehreren der vorhergehenden Ansprüche, dadurch gekennzeichnet, daß in der Materialschicht (5) auf Bereichen außerhalb des Meßgitters (2) Hinweise bzw. Markierungen ausgeformt sind.

7. Meßgrößenaufnehmer mit zumindest einem Dehnungsmeßstreifen nach einem oder mehreren der vorhergehenden Ansprüche zur Aufnahme der Meßgröße.

## Claims

1. Strain gauge, in particular strain gauge for measuring elements, with a measurement grid (2) which is located on at least one side of a substrate (1) and is formed from at least one layer of electrically conductive material connected to the substrate (1), characterised in that regions of this side of the substrate outside the measurement grid (2) and its connections are covered with at least one layer of material (5), in particular a layer of electrically conductive material.

2. Strain gauge according to claim 1, characterised in that the regions of the substrate (1) outside the measurement grid (2) are covered more or less completely with at least one layer of material (5), in particular a layer of electrically conductive material.

3. Strain gauge according to claim 1, characterised in that in order to influence the measurement properties, particular regions of the substrate (1) outside the measurement grid (2) are covered with at least one layer of material (5), in particular a layer of electrically conductive material.

4. Strain gauge according to one or more of the preceding claims, characterised in that material and/or thickness of the layer of material (5) in regions outside the measurement grid (2) and of the measurement grid (2) are identical.

5. Strain gauge according to one or more of the preceding claims, characterised in that the thickness of the layer of material (5) in regions outside the measurement grid (2) is greater than the thickness of the measurement grid (2).

6. Strain gauge according to one or more of the preceding claims, characterised in that references or markings are picked out in the layer of material (5) in regions outside the measurement grid (2).

7. Measuring element with at least one strain gauge according to one or more of the preceding claims for picking up the measured quantity.

## Revendications

1. Jauge de contrainte, notamment jauge de contrainte pour capteur de grandeur de mesure, comprenant une grille de mesure (2) disposée au moins sur un côté d'une couche de support (1) et formée par au moins une couche de matériau électriquement conducteur reliée à la couche de support (1), caractérisée en ce que des zones de ce côté de la couche de support qui sont à l'extérieur de la grille de mesure (2) et de ses bornes sont recouvertes par au moins une couche de matériau (5), et notamment une couche d'un matériau électriquement conducteur.

2. Jauge de contrainte selon la revendication 1, caractérisée en ce que les zones de la couche de support (1) qui sont situées à l'extérieur de la grille de mesure (2) sont recouvertes à peu près totalement par au moins une couche de matériau (5), et en particulier une couche d'un matériau électriquement conducteur.

3. Jauge de contrainte selon la revendication 1, caractérisée en ce que pour avoir une influence sur les qualités de mesure, des zones déterminées de la couche de support (1) sont recouvertes à l'extérieur de la grille de mesure (2) par au moins une couche de matériau (5), notamment une couche d'un matériau électriquement conducteur.

4. Jauge de contrainte selon une ou plusieurs des revendications précédentes, caractérisée en ce que le matériau et/ou l'épaisseur de la couche de matériau (5) et de la grille de mesure (2) sont égales dans les zones situées à l'extérieur de la grille de mesure (2).

5. Jauge de contrainte selon une ou plusieurs des revendications précédentes, caractérisée en ce que l'épaisseur de la couche de matériau (5) est plus importante dans les zones situées à l'extérieur de la grille de mesure (2) que l'épaisseur de cette grille de mesure (2).

6. Jauge de contrainte selon une ou plusieurs des revendications précédentes, caractérisée en ce que des indications ou des marques sont formées dans la couche de matériau (5) dans des zones situées à l'extérieur de la grille de mesure (2).

7. Détecteur de grandeur de mesure comprenant au moins une jauge de contrainte selon une ou plusieurs des revendications précédentes, en vue de la réception de grandeurs de mesure.
